# EUROPÄISCHE PATENTSCHRIFT

(11) **EP 1 058 488 B1**
(45) Veröffentlichungstag und Bekanntmachung des Hinweises auf die Patenterteilung: **26.06.2002**
(21) Anmeldenummer: 00108726.1
(22) Anmeldetag: 22.04.2000
(51) Int. Cl.: H05B 41/24, H05B 41/02, H05B 41/231, H05B 41/295

(54) **Schaltungsanordnung zum Zünden einer Lampe**
Ignition circuit for a lamp
Circuit d'allumage pour lampe

(30) Priorität: 20.05.1999 DE 19923263
(43) Veröffentlichungstag der Anmeldung: 06.12.2000
(73) Patentinhaber: Patent-Treuhand-Gesellschaft für elektrische Glühlampen mbH, 81543 München (DE)
(72) Erfinder: Huber, Andreas, 82216 Maisach (DE); Limmer, Walter, 80337 München (DE); Niedermeier, Peter, 80995 München (DE)

(56) Entgegenhaltungen:
- EP-A- 0 794 694
- PATENT ABSTRACTS OF JAPAN vol. 1998, no. 04, 31. März 1998 (1998-03-31) & JP 09 320777 A (MATSUSHITA ELECTRIC WORKS LTD), 12. Dezember 1997 (1997-12-12)
- PATENT ABSTRACTS OF JAPAN vol. 016, no. 521 (E-1285), 27. Oktober 1992 (1992-10-27) & JP 04 196096 A (MATSUSHITA ELECTRIC WORKS LTD), 15. Juli 1992 (1992-07-15)

## Beschreibung

Die vorliegende Erfindung betrifft eine Schaltungsanordnung zum Zünden einer Lampe, insbesondere einer Hochdruckentladungslampe, mit einem Zündübertrager, der eine Primär- und eine Sekundärseite aufweist, wobei die Sekundärseite mit der zu zündenden Lampe verbindbar ist, und die Primärseite mit einem Zündschalter verbunden ist.

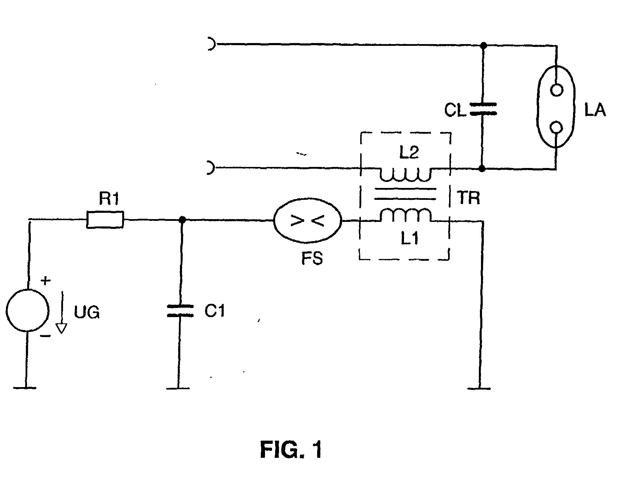

Zur Darstellung der der Erfindung zugrundeliegenden Problematik zeigt Fig. 1 eine derartige Schaltungsanordnung wie sie aus dem Stand der Technik bekannt ist. Ein Kondensator C1 wird über einen Widerstand R1 aus einer Gleichspannungsquelle U_{G} aufgeladen. Anschließend wird der Kondensator C1 durch Kurzschließen einer Funkenstrecke FS über die Primärseite L1 des Zündübertragers TR entladen bis er leer ist. Alternativ zur Funkenstrecke werden hierbei auch andere selbsttriggernde Leistungsschalter, beispielsweise SIDACs, oder triggerbare Leistungsschalter, beispielsweise Thyristoren oder Triacs verwendet. Der hohe, die Primärwicklung L1 des Zündübertragers TR durchfließende Strom wird auf die Sekundärwicklung L2 des Zündübertragers übertragen und führt dort zu einem Zünden der Lampe LA. Die in Fig. 1 eingezeichnete Kapazität CL berücksichtigt die Kapazität zwischen den beiden Lampendrähten, die je nach Entfernung von Zündschaltung und Lampe LA meistens zwischen 20 und 200 pF beträgt. Mit zum Einsatzgebiet derartiger Schaltungsanordnungen rechnen Hochdruckentladungslampen, die im Hinblick auf ihre vielfältigen Einsatzmöglichkeiten als Massenprodukt zu betrachten sind.

Die Aufgabe der vorliegenden Erfindung besteht darin, eine Schaltungsanordnung der eingangs genannten Art derart weiterzubilden, daß Herstellungskosten und -aufwand geringer sind als bei der aus dem Stand der Technik bekannten Schaltungsanordnung.

Zur Lösung dieser Aufgabe sieht die vorliegende Erfindung vor, daß der Zündschalter steuerbar ist, um einen durch die Primärseite des Zündübertragers fließenden Strom aktiv abzuschalten.

Der erfindungsgemäßen Lösung liegt die Erkenntnis zugrunde, daß, sofern der Zündschalter gesteuert werden kann, um einen durch die Primärseite des Zündübertragers fließenden Strom aktiv abzuschalten, als Speicher für die Zündenergie auch ein Ladungsspeicher verwendet werden kann, der mehr Ladung gespeichert hat als für den Zündvorgang erforderlich ist. In einer besonders vorteilhaften Ausführungsform ist die Primärseite des Zündübertragers zur Bereitstellung der Zündenergie daher mit einer beliebigen, in der Schaltung ohnehin vorhandenen Gleichspannungsquelle, beispielsweise dem Zwischenkreiskondensator der Schaltungsanordnung zum Betrieb der Lampe, verbunden. Diese Lösung ermöglicht den Verzicht auf die Bauteile R1 und C1 gemäß Fig. 1. Dadurch, daß die von R1 und C1 bestimmte Ladezeitkonstante entfällt, stellt die Erfindung die Möglichkeit bereit, prinzipiell beliebig schnell aufeinanderfolgende Zündimpulse gleicher Amplitude zu erzeugen.

Die variable Einschaltdauer des Zündschalters ermöglicht außerdem eine Beeinflussung der Zündimpulsamplitude. Dieser Effekt läßt sich vorteilhaft dazu nutzen, Bauteiletoleranzen und insbesondere den Einfluß der Ausgangskapazität so auszugleichen, daß die Amplitude der erzeugten Zündspannung nahezu konstant bleibt. Die führt zu einer sehr zuverlässigen Lampenzündung.

Bei einer vorteilhaften Realisierung ist die Primärwicklung des Zündübertragers zwischen dem Zwischenkreiskondensator und dem Zündschalter angeordnet.

Mit einem im Strompfad auf der Primär- und/oder Sekundärseite des Zündübertragers angeordneten, den Stromanstieg begrenzenden Bauelement, insbesondere einer Drossel, wird verhindert, daß unmittelbar nach dem Einschalten des Zündschalters ein unerwünscht hoher Strom fließt. Dieses Bauelement wirkt zusätzlich zur Streuinduktivität des Zündübertragers, die ohnehin immer vorhanden ist, ermöglicht jedoch weitere Freiheiten bei der Dimensionierung des Zündübertragers.

Die erfindungsgemäße Lösung stellt jedoch auch die Grundlage bereit, um weiteren Anforderungen an eine Zündschaltung Rechnung zu tragen: Ausgehend von der in Fig. 1 dargestellten Prinzipschaltung für eine Schaltungsanordnung zum Zünden einer Lampe lassen sich damit, selbst bei Optimierung der einzelnen Schaltungsparameter, für manche Lampen, insbesondere Hochdruckentladungslampen, Zündimpulse, die zu einer zuverlässigen Zündung der Lampen führen, nicht immer erzeugen. Die Spezifikation eines Zündimpulses ist häufig in Normen festgelegt, beispielsweise in der amerikanischen Norm ANSI M98, die die elektrischen Daten zum Betrieb einer "70W Single Ended HID Lamp" definiert. Für eine Lastkapazität CL von 20 pF sollte die minimale Zündimpulshöhe 3 kV, die maximale Zündimpulshöhe 4 kV sowie die minimale Impulsbreite 1 µs @ 2,7 kV betragen. Die minimale Impulswiederholrate soll 240 Hz betragen.

Mit Schaltungsanordnungen, die auf der Prinzipschaltung gemäß Fig. 1 basierten, konnte im Rahmen einer vernünftigen Baugröße des Zündübertragers bzw. ohne starke Beeinträchtigung des Lampennormalbetriebs, d.h. des Betriebs nach dem Zünden, kein Zündimpuls erzeugt werden, der diesen Kriterien der ANSI M98 genügte.

Hierbei ist zu berücksichtigen, daß sich bei der Dimensionierung des Zündübertragers, insbesondere der Sekundärseite, sich widersprechende Bedingungen ergeben: Zum einen soll im Hinblick auf den Normalbetrieb, d.h. nach Zündung der Lampe, L2 so dimensioniert werden, daß der Innenwiderstand klein ist, zum andern, im Hinblick auf die Zündung, soll L2 so dimensioniert werden, daß damit ein breiter Zündimpuls erzeugt werden kann. Während die erste Bedingung ein L2 mit wenig Windungen erfordert, ist für die zweite Bedingung ein L2 mit hoher Windungszahl nötig. Für diese unterschiedlichen Anforderungen läßt sich auf der Grundlage der Prinzipschaltung gemäß Fig. 1 keine befriedigende Lösung finden.

Anders ist dies bei einer besonders vorteilhaften Ausführungsform der Erfindung: Wird vorgesehen, daß eine Kapazität parallel zur Sekundärwicklung des Zündübertragers wirkt, wobei die Kapazität und die Sekundärwicklung des Zündübertragers einen Resonanzkreis mit einer vorbestimmten Resonanzfrequenz und einer vorbestimmten maximalen Scheitelspannung bilden können, so läßt sich ein sinusförmiger Zündimpuls generieren, mit dem die elektrischen Anforderungen an den Zündimpuls, insbesondere hinsichtlich seiner Breite, erfüllt werden können. Hierbei kann L2 im Hinblick auf niedrigen Widerstand beim Betrieb der Lampe, d.h. nach dem Zünden, wenig Windungen aufweisen. Auch lassen sich dadurch die Lastkapazitätseinflüsse drastisch reduzieren.

Bei der Realisierung kann die parallel zur Sekundärwicklung wirkende Kapazität durch eine parallel zur Sekundärwicklung des Zündübertragers geschaltete Kapazität oder durch eine parallel zu den Anschlußklemmen der Lampe geschaltete Kapazität realisiert werden. Die letztgenannte Variante kommt in Betracht, wenn am Ausgang des gewöhnlich vorhandenen Lampenstromgenerators ein Ausgangsfilterkondensator vorhanden ist. Da der Kapazitätswert des Ausgangsfilterkondensators viel größer ist als der Kapazitätswert der parallel zu den Anschlußklemmen der Lampe geschalteten Kapazität, bleibt eine Spannungsänderung am Ausgangsfilterkondensator während der Impulserzeugung klein. Damit wirkt die parallel zu den Anschlußklemmen der Lampe geschaltete Kapazität wie wenn sie parallel zur Sekundärwicklung des Zündübertragers angeordnet wäre. Der Vorteil dieser Realisierung ergibt eine zusätzliche filternde Wirkung auf den Strom im Normalbetrieb und resultiert dadurch in günstigeren Funkstörwerten. Der Zündimpuls bleibt von der Anordnung der parallel zur Sekundärwicklung des Zündübertragung wirkenden Kapazität weitgehend unbeeinflußt.

Während mit der Schaltungsanordnung gemäß Fig. 1 nur ein kosinusförmiger Zündimpuls erzeugt werden kann, kann mit der besonders bevorzugten Ausführung der vorliegenden Erfindung nunmehr ein sinusförmiger Zündimpuls erzeugt werden, mit dem die Anforderung hinsichtlich der Zündimpulsbreite, beispielsweise 1 µs @ 2,7 kV gemäß ANSI M98, siehe oben, wesentlich leichter erfüllt werden kann.

Damit sich die im Zündkreis gespeicherte Energie nach dem Abschalten des Zündschalters primärseitig freilaufen kann, wird vorgeschlagen, den Zündschalter einerseits über die Primärseite des Zündübertragers, andererseits über eine Klemmschaltung mit dem Zwischenkreiskondensator zu verbinden. Dies ist insbesondere vorteilhaft, um beispielsweise bei defekter Lampe und damit nicht erfolgter Zündung, eine Zerstörung des Zündschalters zu verhindern.

Bei einer ersten Ausführungsform umfaßt die Klemmschaltung eine Diode und eine Zenerdiode, die antiseriell zueinander geschaltet sind. Sie sorgen dafür, daß die Spannung am Zündschalter begrenzt wird und der Zündübertrager bis zum nächsten Zündimpuls entmagnetisiert ist.

Alternativ kann die Klemmschaltung eine Diode umfassen, die seriell zu einer Parallelschaltung aus einem Kondensator und einem ohmschen Widerstand angeordnet ist. Der Vorteil einer derartigen Klemmschaltung besteht darin, daß die Impulsenergie im Kondensator "schnell" gespeichert und durch den ohmschen Widerstand bis zum nächsten Zündimpuls "langsam" abgebaut werden kann.

Es kann jedoch auch vorgesehen werden, daß anstelle der oben erwähnten Klemmschaltungen die Arbeitselektrode des Zündschalters einerseits über die Primärseite des Zündübertragers, andererseits über eine Serienschaltung aus einem Kondensator und einer ersten Diode mit der Gleichspannungsquelle, bevorzugt dem Zwischenkreiskondensator, verbunden ist, und die Bezugselektrode des Zündschalters über die Serienschaltung einer zweiten Diode und einer Drossel mit dem Verbindungspunkt zwischen dem Kondensator und der ersten Diode verbunden ist. Diese Schaltungsmaßnahme ist bekannt aus der DE 298 02 174.9, deren Offenbarungsgehalt hiermit durch Bezugnahme in die vorliegende Anmeldung aufgenommen wird. Sie ermöglicht eine vollständige Energierückspeisung der im Zündübertrager gespeicherten Energie, wodurch sich sehr hohe Zündimpulswiederholraten praktisch verlustfrei realisieren lassen. Bei einer Modifikation dieser Schaltungsmaßnahme wird zwischen dem Zwischenkreiskondensator und dem Verbindungspunkt der Drossel und der zweiten Diode eine dritte Diode angeordnet.

Bei einer besonders vorteilhaften Ausführungsform weist der Zündübertrager einen Eisenpulverkern auf. Damit läßt sich ein sehr geringer sekundärseitiger ohmscher Widerstand des Zündübertragers erreichen, wodurch Verluste im Dauerbetrieb der Schaltungsanordnung, d.h. nach Zündung, kleingehalten werden können. Der Eisenpulverkern bietet weiterhin den Vorteil, daß höherfrequente parasitäre Schwingungsanteile im Zündimpuls stark gedämpft werden. Als Ergebnis läßt sich ein fast ideal sinusförmiger Zündimpuls ohne höherfrequente Schwingungsanteile erzeugen.

Weitere vorteilhafte Ausführungsformen der Erfindung können den Unteransprüchen entnommen werden.

Im folgenden werden Ausführungsbeispiele der Erfindung unter Hinweis auf die beigefügten Zeichnungen näher beschrieben. Es stellen dar:
- Fig. 1: eine aus dem Stand der Technik bekannte Prinzipschaltung zur Zündung einer Lampe;
- Fig. 2: in schematischer Darstellung ein Prinzipschaltbild einer Schaltungsanordnung gemäß einer ersten Ausführungsform der vorliegenden Erfindung;
- Fig. 3: in schematischer Darstellung ein Prinzipschaltbild einer Schaltungsanordnung gemäß einer zweiten Ausführungsform der vorliegenden Erfindung; und
- Fig. 4: in schematischer Darstellung ein Prinzipschaltbild einer Schaltungsanordnung gemäß einer dritten Ausführungsform der vorliegenden Erfindung.

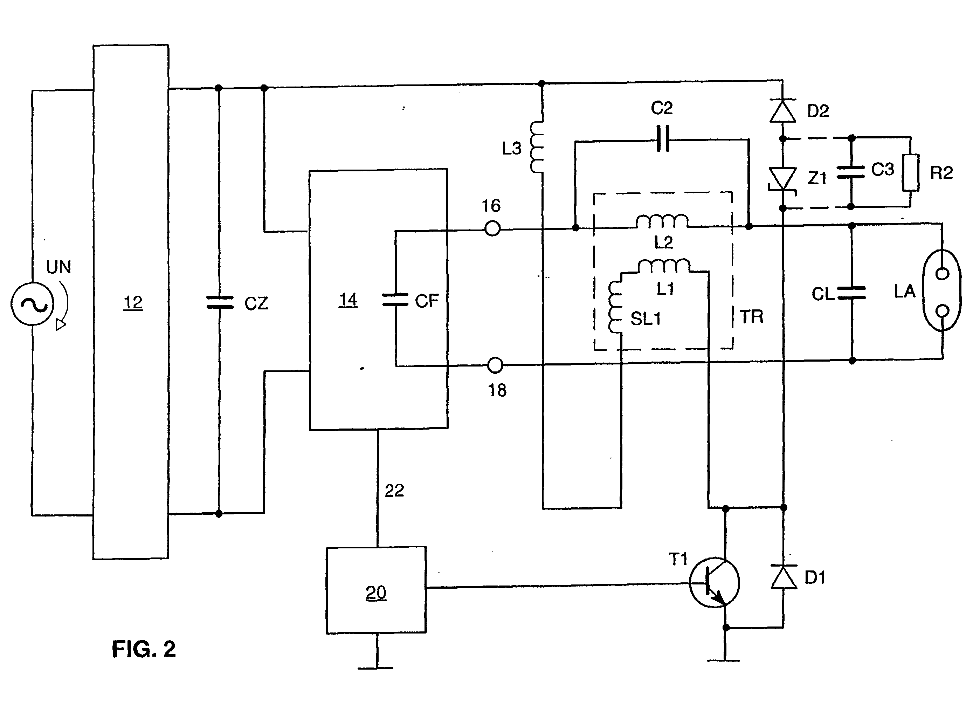

Fig. 2 zeigt schematisch eine Schaltungsanordnung zum Zünden und Betreiben einer Lampe LA, insbesondere einer Hochdruckentladungslampe. Ein Gleichrichter 12 ist eingangsseitig mit einer Netzspannungquelle UN, ausgangsseitig mit einem Zwischenkreiskondensator CZ verbunden. Der Zwischenkreiskondensator CZ stellt für die in der Schaltungsanordnung rechts davon angeordneten Bauteile eine Gleichspannung bereit. Parallel zum Zwischenkreiskondensator CZ ist ein Lampenstromgenerator 14 angeordnet, parallel zu dessen Ausgangsklemmen 16,18 ein Ausgangsfilterkondensator CF geschaltet ist. Mit der Ausgangsklemme 16 ist die eine Seite der Sekundärwicklung L2 eines Zündübertragers TR verbunden. Zwischen der zweiten Seite der Sekundärwicklung L2 des Zündübertragers TR und der Ausgangsklemme 18 des Lampenstromgenerators ist die zündende Lampe LA angeordnet. Parallel zur Lampe LA berücksichtigt eine Kapazität CL die in der Realität von den Lampendrähten herrührende Kapazität. Parallel zur Sekundärwicklung L2 des Zündübertragers TR ist ein Kondensator C2 angeordnet. Die Serienschaltung aus Primärwicklung L1 und primärseitiger Streuinduktivität SL1 des Zündübertragers TR ist einerseits über eine Drossel L3 mit dem Zwischenkreiskondensator CZ, andererseits mit der Arbeitselektrode eines Schalters T1 verbunden. Zwischen Arbeitselektrode und Bezugselektrode des Schalters T1 ist antiparallel eine Freilaufdiode D1 geschaltet. Die Steuerelektrode des Schalters T1 ist mit einer Zündungssteuerung 20 verbunden, die ihrerseits über eine Leitung 22 mit dem Lampenstromgenerator 14 in Verbindung steht. Die Leitung 22 ermöglicht Signalfluß vom Lampenstromgenerator 14 zur Zündungssteuerung 20 und umgekehrt. Die Bezugselektrode des Schalters T1 ist mit einer antiseriellen Anordnung einer Zenerdiode Z1 und einer Diode D2 mit dem Zwischenkreiskondensator CZ verbunden. Gestrichelt eingezeichnet ist eine Alternative zur Zenerdiode Z1, welche einen Kondensator C3 und einen ohmschen Widerstand R2 umfaßt.

Zur Funktionsweise der Schaltungsanordnung gemäß Fig. 2 im Hinblick auf die Zündung der Lampe LA:

Auf einen Freigabeimpuls der Zündungssteuerung 20 mit definierter Zeitdauer, welcher an die Steuerelektrode des Schalters T1 angelegt wird, schließt dieser für ebenfalls eine definierte Zeitdauer, d.h. er läßt während eines bestimmten Zeitraums einen Stromfluß in Hauptstromflußrichtung von der Arbeitselektrode zur Bezugselektrode zu. Der Schalter T1 kann beispielsweise als IGBT-Leistungstransistor realisiert sein, der in der Lage ist, auch hohe Zündströme zu unterbrechen. Für die Dauer, in der der Schalter T1 geschlossen ist, fließt demnach - getrieben vom Zwischenkreiskondensator CZ, der als Gleichspannungsquelle wirkt - ein primärseitiger Zündstrom durch die Serienschaltung aus L3, SL1, L1 und T1 zur Masse. Die Drossel L3 wirkt mit der Streuinduktivität SL1 zusammen und begrenzt den Anstieg des primärseitigen Zündstroms unmittelbar nach dem Schließen des Schalters T1. Ohne den Kondensator C2 würde dies dennoch zu einem nahezu kosinusförmigen Verlauf des Zündstroms durch die Sekundärwicklung L2 des Zündübertragers TR führen. Da jedoch, wie oben bereits erwähnt, im Hinblick auf die Zündimpulsbreite ein möglichst sinusförmiger Zündimpuls erwünscht ist, ist parallel zur Sekundärwicklung L2 des Zündübertragers TR eine Kapazität C2 geschaltet. Bei geeigneter Dimensionierung läßt sich dadurch ein Resonanzkreis bei einer vorbestimmten Frequenz sowie mit vorbestimmter Scheitelspannung und somit ein sinusförmiger, relativ breiter Zündimpuls erzeugen.

Zum Freilaufen der primärseitig gespeicherten Energie, insbesondere bei beispielsweise aufgrund einer defekten Lampe LA nicht erfolgter Zündung, ist eine Klemmschaltung umfassend die Diode D2 und die Zenerdiode Z1 vorgesehen. Sie dient zur Begrenzung der Spannung am Schalter T1 sowie zur Entmagnetisierung des Zündübertragers bis zum nächsten Zündimpuls. Alternativ hierzu kann die Klemmschaltung auch aus der Serienschaltung der Diode D2 zur Parallelschaltung eines Kondensators C3 und eines ohmschen Widerstandes R2 realisiert werden. Der Kondensator C3 dient zur schnellen Speicherung der Impulsenergie, wohingegen der Widerstand R2 einen langsamen Abbau der Impulsenergie bis zum nächsten Zündimpuls gestattet.

Der Zündübertrager TR weist vorzugsweise einen Eisenpulverkern auf, beispielsweise einen EF 32-Eisenpulverkern der Firma HARTU aus dem Material Nr. 629. Die Drossel L3 kann durch eine Garnrollenkern-Drossel der Firma FASTRON realisiert werden, wobei diese ungesättigt eine Induktivität von 100 µH besitzt.

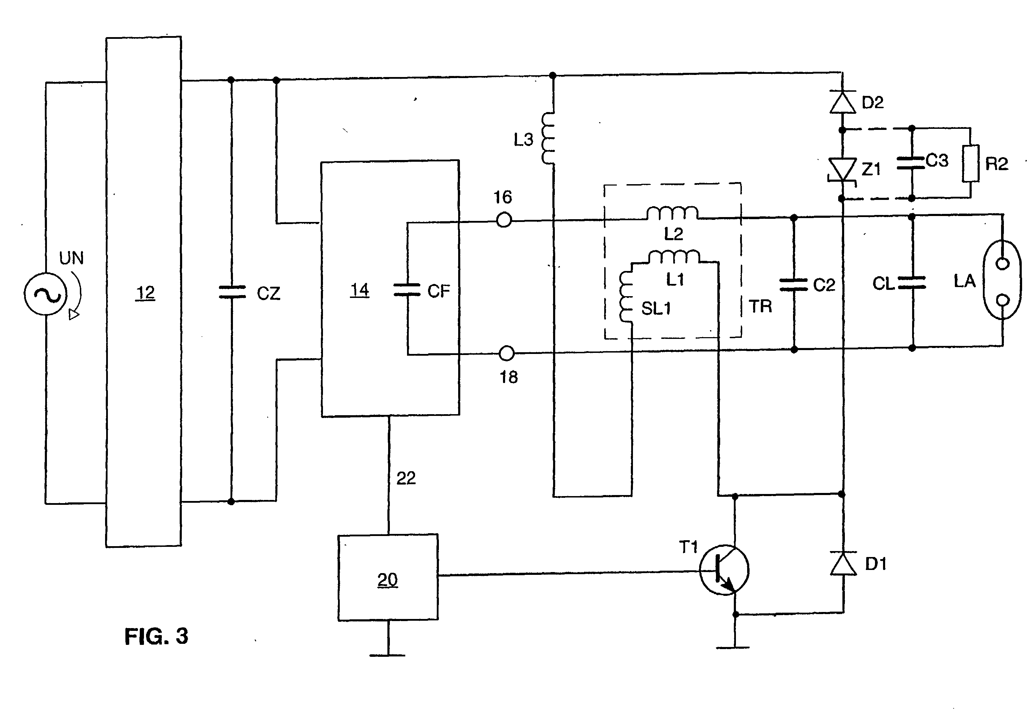

Bei der in Fig. 3 dargestellten alternativen Ausführungsform ist der Resonanzkreiskondensator C2 parallel zur Lampe LA geschaltet. Im Hinblick auf seine Wirkungsweise bei der Zündung der Lampe LA hat dies keinen negativen Einfluß, sofern der Ausgangsfilterkondensator CF groß ist, da dann die Spannungsänderung am Ausgangsfilterkondensator CF während der Impulserzeugung klein bleibt. Bei der Ausführungsform gemäß Fig. 3 bezeichnen gleiche Bezugszeichen wie in Fig. 2 gleiche Bauelemente und werden daher nicht nochmal beschrieben. Die Ausführungsform gemäß Fig. 3 bietet den Vorteil, daß die Sekundärwirkung L2 des Zündübertragers TR und der Resonanzkreiskondensator C2 eine HF-Filterstufe bilden, die für den niederfrequenten Lampenbetrieb störende HF-Anteile des Lampenstromes weiter reduziert. Hierdurch wird auch die Störstrahlung der Schaltungsanordnung verringert.

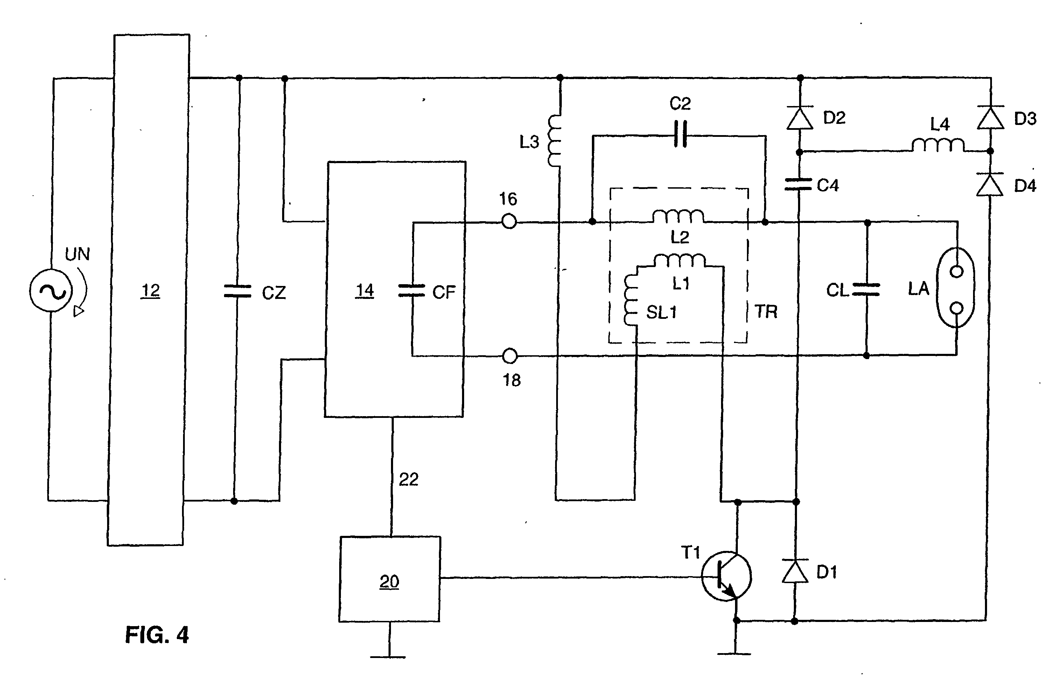

Bei der Schaltungsanordnung gemäß Fig. 4, bei der gleiche Bezugszeichen wie in Fig. 2 gleiche Bauteile bezeichnen, ist anstelle einer Klemmschaltung eine Teilschaltung umfassend eine Diode D2, einen Kondensator C4, eine Drossel L4, eine Diode D3 sowie eine Diode D4 vorgesehen, wobei der Zweig mit der Diode D3 gegebenenfalls entfallen kann. Diese Erweiterung der Zündschaltung ermöglicht eine vollständige Energierückspeisung der im Zündübertrager gespeicherten Energie und ist in der DE 298 02 174.9 hinsichtlich ihrer Wirkungsweise ausführlich beschrieben. Sie ermöglicht die praktisch verlustfreie Realisierung sehr hoher Zündimpulswiederholraten bis zu einigen 10 kHz. Auch bei dieser Anordnung läßt sich ohne Einschränkung der Funktion der Resonanzkreiskondensator C2 wie in Fig. 3 parallel zu den Anschlüssen der Lampe LA anordnen.

Mit dem erfindungsgemäßen Schaltungskonzept lassen sich im Vergleich zur Schaltungsanordnung gemäß Fig. 1 Zündimpulse mit einer um den Faktor 10 größeren Zündimpulsbreite erzeugen. Bei Warmwiederzündung ließen sich die Lampen bereits nach ca. 30 % kürzerer Abkühldauer wieder starten. Das erfindungsgemäße Schaltungskonzept zeichnet sich weiterhin durch eine gute Reproduzierbarkeit der Zündimpulse aus.

## Patentansprüche

1. Schaltungsanordnung zum Zünden einer Lampe (LA), insbesondere einer Hochdruckentladungslampe, mit einem Zündtransformator (TR), der eine Primär- und eine Sekundärwicklung (L1, L2) aufweist, wobei die Sekundärwicklung (L2) mit der zu zündenden Lampe (LA) und die Primärwicklung (L1) mit einem Zündschalter (T1) verbunden ist, **dadurch gekennzeichnet, dass** der Zündschalter (T1) steuerbar ist, um einen durch die Primärwicklung des Zündtransformators (TR) fließenden Strom aktiv abzuschalten.

2. Schaltungsanordnung nach Anspruch 1, **dadurch gekennzeichnet, dass** die Primärwicklung (L1) des Zündtransformators (TR) zur Bereitstellung der Zündenergie mit einer Gleichspannungsquelle (CZ), insbesondere dem Zwischenkreiskondensator der Schaltungsanordnung zum Betrieb der Lampe (LA), verbunden ist.

3. Schaltungsanordnung nach Anspruch 2, **dadurch gekennzeichnet, dass** die Primärwicklung (L1) des Zündtransformators (TR) zwischen dem Zwischenkreiskondensator (CZ) und dem Zündschalter (T1) angeordnet ist.

4. Schaltungsanordnung nach einem der vorhergehenden Ansprüche, **dadurch gekennzeichnet, dass** im Strompfad auf der Seite der Primär- und/oder der Sekundärwicklung (L1, L2) des Zündtransformators (TR) ein den Stromanstieg begrenzendes Bauelement (L3), insbesondere eine Drossel, angeordnet ist.

5. Schaltungsanordnung nach einem der vorhergehenden Ansprüche, **dadurch gekennzeichnet, dass** eine Kapazität (C2) parallel zur Sekundärwicklung (L2) des Zündtransformators (TR) wirkt.

6. Schaltungsanordnung nach Anspruch 5, **dadurch gekennzeichnet, dass** die Kapazität (C2) und die Sekundärwicklung (L2) des Zündtransformators (TR) einen Resonanzkreis mit einer vorbestimmten Resonanzfrequenz und/oder einer vorbestimmten Scheitelspannung bilden.

7. Schaltungsanordnung nach Anspruch 5 oder 6, **dadurch gekennzeichnet, dass** die parallel zur Sekundärwicklung (L2) wirkende Kapazität (C2) durch eine parallel zur Sekundärwicklung (L2) des Zündtransformators (TR) geschaltete Kapazität (C2) realisiert ist.

8. Schaltungsanordnung nach Anspruch 5 oder 6, **dadurch gekennzeichnet, dass** die parallel zur Sekundärwicklung (L2) wirkende Kapazität (C2) durch eine parallel zu den Anschlussklemmen der Lampe (LA) geschaltete Kapazität (C2) realisiert ist.

9. Schaltungsanordnung nach einem der Ansprüche 5 bis 8, **dadurch gekennzeichnet, dass** die Kapazität (C2) so dimensioniert ist, dass ein im wesentlichen sinusförmiger Zündimpuls erzeugbar ist.

10. Schaltungsanordnung nach einem Ansprüche 2 bis 9, **dadurch gekennzeichnet, dass** der Zündschalter (T1) einerseits über die Primärwicklung (L1) des Zündtransformators (TR), andererseits über eine Klemmschaltung mit dem Zwischenkreiskondensator (CZ) verbunden ist.

11. Schaltungsanordnung nach Anspruch 10, **dadurch gekennzeichnet, dass** die Klemmschaltung eine Diode (D2) und eine Zenerdiode (Z1) umfasst, die antiseriell zueinander geschaltet sind.

12. Schaltungsanordnung nach Anspruch 10, **dadurch gekennzeichnet, dass** die Klemmschaltung eine Diode (D2) umfasst, die seriell zu einer Parallelschaltung aus einem Kondensator (C3) und einem ohmschen Widerstand (R2) angeordnet ist.

13. Schaltungsanordnung nach einem der Ansprüche 2 bis 9, **dadurch gekennzeichnet, dass** die Arbeitselektrode des Zündschalters (T1) einerseits über die Primärwicklung (L1) des Zündtransformators (TR), andererseits über eine Serienschaltung aus einem Kondensator (C4) und einer ersten Diode (D2) mit dem Zwischenkreiskondensator (CZ) verbunden ist, und die Bezugselektrode des Zündschalters (T1) über die Serienschaltung einer zweiten Diode (D4) und einer Drossel (L4) mit dem Verbindungspunkt zwischen dem Kondensator (C4) und der ersten Diode (D2) verbunden ist.

14. Schaltungsanordnung nach Anspruch 13, **dadurch gekennzeichnet, dass** zwischen dem Zwischenkreiskondensator (CZ) und dem Verbindungspunkt der Drossel (L4) und der zweiten Diode (D4) eine dritte Diode (D3) angeordnet ist.

15. Schaltungsanordnung nach einem der vorhergehenden Ansprüche, **dadurch gekennzeichnet, dass** der Zündtransformator (TR) einen Eisenpulverkern aufweist.

## Claims

1. Circuit arrangement for igniting a lamp (LA), in particular a high-pressure discharge lamp, having an ignition transformer (TR) which has a primary winding and a secondary winding (L1, L2), the secondary winding (L2) being connected to the lamp (LA) which is to be ignited, and the primary winding (L1) being connected to an ignition switch (T1), **characterized in that** the ignition switch (T1) can be controlled for actively disconnecting a current flowing through the primary winding of the ignition transformer (TR).

2. Circuit arrangement according to Claim 1, **characterized in that**, to provide the ignition energy, the primary winding (L1) of the ignition transformer (TR) is connected to a DC voltage source (CZ), in particular to the intermediate circuit capacitor of the circuit arrangement for operating the lamp (LA).

3. Circuit arrangement according to Claim 2, **characterized in that** the primary winding (L1) of the ignition transformer (TR) is arranged between the intermediate circuit capacitor (CZ) and the ignition switch (T1).

4. Circuit arrangement according to one of the preceding claims, **characterized in that** a component (L3), particularly an inductor, which limits the rise in current is arranged in the current path on the side of the primary and/or secondary winding (L1, L2) of the ignition transformer (TR).

5. Circuit arrangement according to one of the preceding claims, **characterized in that** a capacitor (C2) acts in parallel with the secondary winding (L2) of the ignition transformer (TR).

6. Circuit arrangement according to Claim 5, **characterized in that** the capacitor (C2) and the secondary winding (L2) of the ignition transformer (TR) form a resonant circuit having a predetermined resonant frequency and/or a predetermined peak voltage.

7. Circuit arrangement according to Claim 5 or 6, **characterized in that** the capacitor (C2) acting in parallel with the secondary winding (L2) is a capacitor (C2) connected in parallel with the secondary winding (L2) of the ignition transformer (TR).

8. Circuit arrangement according to Claim 5 or 6, **characterized in that** the capacitor (C2) acting in parallel with the secondary winding (L2) is a capacitor (C2) connected in parallel with the connection terminals of the lamp (LA).

9. Circuit arrangement according to one of Claims 5 to 8, **characterized in that** the capacitor (C2) is proportioned such that an essentially sinusoidal ignition pulse can be produced.

10. Circuit arrangement according to one of Claims 2 to 9, **characterized in that** the ignition switch (T1) is connected to the intermediate circuit capacitor (CZ), on the one hand via the primary winding (L1) of the ignition transformer (TR), and on the other hand via a clamp circuit.

11. Circuit arrangement according to Claim 10, **characterized in that** the clamp circuit. comprises a diode (D2) and a zener diode (Z1) which are in reverse-connected series with one another.

12. Circuit arrangement according to Claim 10, **characterized in that** the clamp circuit comprises a diode (D2) which is arranged in series with a parallel circuit comprising a capacitor (C3) and a nonreactive resistor (R2).

13. Circuit arrangement according to one of Claims 2 to 9, **characterized in that** the main electrode of the ignition switch (T1) is connected to the intermediate circuit capacitor (CZ), on the one hand via the primary winding (L1) of the ignition transformer (TR) and on the other hand via a series circuit comprising a capacitor (C4) and a first diode (D2), and the reference electrode of the ignition switch (T1) is connected to the junction point between the capacitor (C4) and the first diode (D2) via the series circuit comprising a second diode (D4) and an inductor (L4).

14. Circuit arrangement according to Claim 13, **characterized in that** a third diode (D3) is arranged between the intermediate circuit capacitor (CZ) and the junction point between the inductor (L4) and the second diode (D4).

15. Circuit arrangement according to one of the preceding claims, **characterized in that** the ignition transformer (TR) has an iron-powder core.

## Revendications

1. Circuit pour l'allumage d'une lampe (LA), notamment d'une lampe à décharge haute pression, comprenant un transformateur d'allumage (TR) qui comporte un côté primaire (L1) et un côté secondaire (L2), le côté secondaire (L2) étant relié à la lampe (LA) à allumer et le côté primaire (L1) étant relié à un interrupteur d'allumage (T1), **caractérisé par le fait que** l'interrupteur d'allumage (T1) est commandable pour couper activement un courant passant par l'enroulement primaire du transformateur d'allumage (TR).

2. Circuit selon la revendication 1, **caractérisé par le fait que**, pour fournir l'énergie d'allumage, l'enroulement primaire (L1) du transformateur d'allumage (TR) est relié à une source de tension continue (CZ), notamment au condensateur de circuit intermédiaire du circuit destiné à faire fonctionner la lampe (LA).

3. Circuit selon la revendication 2, **caractérisé par le fait que** l'enroulement primaire (L1) du transformateur d'allumage (TR) est placé entre le condensateur de circuit intermédiaire (CZ) et l'interrupteur d'allumage (T1).

4. Circuit selon l'une des revendications précédentes, **caractérisé par le fait qu'**un composant (L3) limitant l'augmentation de courant, notamment une bobine, est placé dans le trajet du courant du côté de l'enroulement primaire et/ou de l'enroulement secondaire (L1, L2) du transformateur d'allumage (TR).

5. Circuit selon l'une des revendications précédentes, **caractérisé par le fait qu'**une capacité (C2) agit en parallèle avec l'enroulement secondaire (L2) du transformateur d'allumage (TR).

6. Circuit selon la revendication 5, **caractérisé par le fait que** la capacité (C2) et l'enroulement secondaire (L2) du transformateur d'allumage (TR) forment un circuit résonant ayant une fréquence de résonance prédéterminée et/ou une tension de crête prédéterminée.

7. Circuit selon la revendication 5 ou 6, **caractérisé par le fait que** la capacité (C2) agissant en parallèle avec l'enroulement secondaire (L2) est réalisée par une capacité (C2) qui est branchée en parallèle avec l'enroulement secondaire (L2) du transformateur d'allumage (TR).

8. Circuit selon la revendication 5 ou 6, **caractérisé par le fait que** la capacité (C2) agissant en parallèle avec l'enroulement secondaire (L2) est réalisée par une capacité (C2) qui est branchée en parallèle avec les bornes de la lampe (LA).

9. Circuit selon l'une des revendications 5 à 8, **caractérisé par le fait que** la capacité (C2) est dimensionnée de telle sorte qu'une impulsion d'allumage globalement sinusoïdale peut être produite.

10. Circuit selon l'une des revendications 2 à 9, **caractérisé par le fait que** l'interrupteur d'allumage (T1) est relié au condensateur de circuit intermédiaire (CZ) d'une part par l'intermédiaire de l'enroulement primaire (L1) du transformateur d'allumage (TR) et d'autre part par l'intermédiaire d'un circuit de verrouillage.

11. Circuit selon la revendication 10, **caractérisé par le fait que** le circuit de verrouillage comprend une diode (D2) et une diode Zener (Z1) qui sont branchées tête-bêche.

12. Circuit selon la revendication 10, **caractérisé par le fait que** le circuit de verrouillage comprend une diode (D2) qui est branchée en série avec un circuit parallèle composé d'un condensateur (C3) et d'une résistance ohmique (R2).

13. Circuit selon l'une des revendications 2 à 9, **caractérisé par le fait que** l'électrode de travail ou collecteur de l'interrupteur d'allumage (T1) est reliée au condensateur de circuit intermédiaire (CZ) d'une part par l'intermédiaire de l'enroulement primaire (L1) du transformateur d'allumage (TR) et d'autre part par l'intermédiaire d'un circuit série composé d'un condensateur (C4) et d'une première diode (D2) et que l'électrode de référence de l'interrupteur d'allumage (T1) est reliée par l'intermédiaire du circuit série composé d'une deuxième diode (D4) et d'une bobine (L4) au point de jonction entre le condensateur (C4) et la première diode (D2).

14. Circuit selon la revendication 13, **caractérisé par le fait qu'**une troisième diode (D3) est placée entre le condensateur de circuit intermédiaire (CZ) et le point de jonction entre la bobine (L4) et la deuxième diode (D4).

15. Circuit selon l'une des revendications précédentes, **caractérisé par le fait que** le transformateur d'allumage (TR) comporte un noyau en poudre de fer.
